(19) Europäisches Patentamt
European Patent Office
Office européen des brevets

(11) Numéro de publication : **0 138 934**
**B1**

(12) # FASCICULE DE BREVET EUROPÉEN

(45) Date de publication du fascicule du brevet : **15.03.89**

(51) Int. Cl.⁴ : **C 08 F 2/38**, C 09 D 3/00

(21) Numéro de dépôt : **84901371.9**

(22) Date de dépôt : **06.04.84**

(86) Numéro de dépôt international : **PCT/FR 84/00092**

(87) Numéro de publication internationale : **WO/8404097 (25.10.84 Gazette 84/25)**

(54) **TELOMERES ACRYLIQUES A GREFFONS PHOTORETICULABLES, LEURS SYNTHESES ET LEURS APPLICATIONS DANS LE REVETEMENT DES METAUX.**

(30) Priorité : **11.04.83 FR 8306066**

(43) Date de publication de la demande : **02.05.85 Bulletin 85/18**

(45) Mention de la délivrance du brevet : **15.03.89 Bulletin 89/11**

(84) Etats contractants désignés : **AT BE CH DE GB LI LU NL SE**

(56) Documents cités :
**WO–A–83 /003 36**
**FR–A– 1 308 638**
**US–A– 4 013 824**

(73) Titulaire : **Société Anonyme dite: NORSOLOR**
**Tour Aurore, Place des Reflets**
**F-92080 Paris la Défense 2, Cedex 5 (FR)**

(72) Inventeur : **BAUDUIN, Gérard**
**18, rue Aubépine**
**F-34000 Montpellier (FR)**
Inventeur : **BOUTEVIN, Bernard Lotissement "Les Terres Blanches"**
**1, place Anselme Mathieu**
**F-34100 Montpellier (FR)**
Inventeur : **DEISS, Willy-Jean**
**8, boulevard Maréchal Leclerc**
**F-38000 Grenoble (FR)**
Inventeur : **PIETRASANTA, Yves**
**14, place Meril Poujade**
**F-34140 Mèze (FR)**

(74) Mandataire : **Rieux, Michel**
**NORSOLOR Service Propriété Industrielle Tour Aurore Place des Reflets Cédex no. 5**
**F-92080 Paris la Défense 2 (FR)**

**EP 0 138 934 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention est relative à des télomères acryliques à greffons photoréticulables, à leurs synthèses et à leurs applications dans le revêtement des métaux et notamment de l'aluminium.

Les télomères sont des produits organiques de synthèse résultant d'une réaction dite de télomérisation au cours de laquelle un composé non saturé Xi appelé taxogène réagit en présence de catalyseurs ou d'initiateurs avec un autre composé AZ appelé télogène pour donner lieu à la formation d'une séquence de n maillons bivalents —Xi— et à la division du télogène en deux parties qui viennent se fixer aux extrémités de la séquence, de manière à former un produit de formule générale

$$A - \left[ Xi \right]_n - Z$$

Ces télomères peuvent à leur tour servir d'agent télogène à un autre taxogène Yi et conduire à l'obtention de cotélomères biséquencés de formule générale : $A'—(Yi)_n—A''—(Xi)_n—Z$, où A' et A" résultent de la division de A.

La demanderesse s'est surtout intéressée à des dérivés de ces télomères obtenus par fixation sur un nombre limité de maillons de greffons organiques non saturés et plus spécialement de greffons possédant au moins une double liaison photoréticulable de manière à réaliser des télomères greffés de formule générale :

$$A - \left[ (Xi)_x - \underset{\substack{| \\ R}}{(Xi)_y} \right] - Z$$

dans laquelle x + y = n et où x donne le nombre de maillons non greffés et y le nombre de maillons sur lesquels a été fixé le greffon R. Ces dérivés combinent dans leurs propriétés celles des molécules de taxogène non greffées qui peuvent présenter par exemple des fonctions acides ou alcools libres leur conférant une bonne aptitude à l'adhérence sur les métaux, et celles des molécules greffées qui ont, dans le cas présent, la capacité de se réticuler sous l'action d'un rayonnement. C'est ainsi que, dans son brevet français FR-A-2 510 125, la demanderesse décrit des télomères greffés de formule générale :

$$R - CCl_2 - \left[ (Xi)_x - \underset{\substack{| \\ R}}{(Xi)_y} \right] - Z$$

où le taxogène peut être un acide acrylique.

Mais, dans ce cas, le télogène est un dérivé halogéné, tel que le tétrachlorure de carbone et la réaction de télomérisation nécessite la mise en œuvre d'un catalyseur du type redox comme le couple chlorure ferrique-benzoïne, ce qui a l'inconvénient de conduire à des vitesses de télomérisation relativement faibles et à des produits colorés par les sels de fer. Certes, on peut supprimer les inconvénients dûs au fer en effectuant la télomérisation par initiation radicalaire au moyen d'un initiateur peroxydique tel que le peroxyde de benzoyle ou l'azobisisobutyronitrile et en prenant le bromotrichlorométhane comme télogène, mais le coefficient de transfert $C_T$ de ce composé, c'est-à-dire le facteur qui détermine la fraction de cet élément susceptible de se fixer sur le taxogène, bien qu'important, est encore assez faible et conduit à des rendements limités lorsqu'on désire réaliser des réactions à l'échelle industrielle.

De plus, dans ce brevet, les télomères sont synthétisés en discontinu et le problème lié aux catalyseurs radicalaires dans ce type de technique est celui de la polydispersité des produits obtenus. En effet, le degré de polymérisation évoluant avec la concentration en réactifs, les composés formés en début de réaction n'ont pas le même degré de polymérisation que ceux obtenus en fin d'opération de sorte que l'indice de polydispersité, qui correspond au rapport du nombre de molécules moyen en poids au nombre de molécules moyen en nombre, est compris entre 1,6 et 1,8, ce qui donne des produits différents, dont l'hétérogénéité des propriétés peut être gênante pour certaines applications. Certes, il est possible de procéder à une séparation par solvant des différents télomères suivant la valeur de n, mais cette opération s'avère coûteuse et fastidieuse.

Par ailleurs, au niveau du greffage, lorsqu'on utilise par exemple un taxogène à base d'acide acrylique, le greffon mis en œuvre peut être l'alcool allylique, l'alcool cinnamique ou l'acrylate d'éthylène glycol. Dans ce cas, la liaison entre ces composés peut s'effectuer par estérification, réaction relativement lente et incomplète et souvent inadaptée à une extrapolation industrielle. C'est pourquoi, on

procède généralement avant greffage à l'activation des fonctions acides par passage au chlorure d'acide en utilisant par exemple le chlorure de thyonile. Cette étape intermédiaire permet d'atteindre des vitesses et des taux de greffage plus grands, mais rend le procédé plus compliqué et donc moins séduisant.

En outre, les températures mises en œuvre pour faciliter les réactions sont parfois suffisantes pour provoquer une réticulation précoce, c'est-à-dire avant irradiation photonique, de sorte que les produits obtenus sont souvent gélifiés et donc inutilisables pour faire des revêtements.

Tous ces inconvénients ont amené la demanderesse à mettre au point de nouveaux télomères greffés dont la synthèse recourt à des procédés utilisables industriellement et qui se prêtent à des applications intéressantes.

Ses efforts ont porté sur la recherche :

de taxogènes ayant une bonne capacité de télomérisation ;

de télogènes dont le coefficient de transfert soit suffisamment élevé pour avoir de bons rendements de transformation ;

de greffons ayant de bonnes propriétés de photoréticulation et présentant des groupements permettant de les greffer directement sur le télomère sans avoir recours à des réactions intermédiaires et ceci avec une vitesse convenable et dans des conditions de température compatibles avec l'obtention d'un taux réduit de réticulation précoce.

De plus, la demanderesse a orienté ses procédés d'obtention vers les réactions à initiation radicalaire de façon à éviter les défauts de systèmes redox et notamment la coloration par le fer des produits recueillis, réactions qu'elle a réalisées de manière à diminuer l'indice de polydispersité I et à fabriquer ainsi des télomères ayant des degrés de polymérisation $\overline{DPn}$ plus homogènes ne nécessitant aucune opération de séparation. Du choix conjugué de tels télomères et de tels procédés, résultent des produits présentant au niveau des applications des qualités remarquables de souplesse et de tenue mécanique et chimique.

La présente invention est d'abord relative à des télomères photoréticulables de formule générale

$$A \left[ (Xi)_x - (\underset{R}{Xi})_y \right] Z$$

dans laquelle le taxogène Xi est un dérivé de la famille des acryliques, R le greffon présente au moins une double liaison photoréticulable, $x + y \leq 100$, —A et —Z sont les éléments du télogène.

Ces télomères sont caractérisés en ce que

d'une part, le télogène AZ est un mercaptan où A = —BSβ, —B étant un radical organique et —Z = Hβ avec $\beta \leq 2$

d'autre part, le taxogène appartient soit au groupe formé par les acides acrylique, méthacrylique, chloroacrylique, cyanoacrylique, itaconique, soit au groupe formé par l'acrylate de glycidyle, le méthacrylate de glycidyle, le méthacrylate de 2-(1-aziridinyl) éthyle,

et suivant le dit groupe, le greffon appartient

soit, dans le cas des acides acryliques, au groupe formé par l'acrylate de glycidyle, le méthacrylate de glycidyle, le cinnamate de glycidyle, le cinnamylidène de glycidyle, le furylacrylate de glycidyle, l'allylate de glycidyle, l'éther allylique et glycidique, l'acrylate et le méthacrylate 2-(1-aziridinyl)éthyle, l'acrylate et le méthacrylate 3-(1-aziridinyl)propyle, l'acrylate et le méthacrylate 4-(1-aziridinyl)butyle, l'acrylate et le méthacrylate 6-(1-aziridinyl)hexyle, l'acrylate et le méthacrylate 8-(1-aziridinyl)octyle.

soit, dans l'autre cas, au groupe formé par les acides acrylique, méthacrylique, cinnamique, cinnamylidique, furylacrylique.

Ainsi, on trouve dont les produits nouveaux revendiqués des taxogènes Xi appartenant à la famille des acryliques connus pour leur bonne aptitude à se télomériser par l'intermédiaire de leur liaison éthylénique. Ces acryliques possèdent une fonction acide soit libre, soit estérifiée qui conduira après télomérisation à la formation de polyacides estérifiés ou non de formule générale respective :

$$\left[ CH_2 - \overset{R_2}{\underset{CO_2R_3}{C}} \right]_n \text{ dans le 1er cas et } \left[ CH_2 - \overset{R_1}{\underset{CO_2H}{C}} \right]_n \text{ dans le 2ème cas}$$

dans laquelle $R_1$ est tel qu'il définit comme taxogène les acides acrylique, méthacrylique, chloroacrylique, cyanoacrylique et itaconique tandis que $R_2$ et $R_3$ définissent un acrylate ou un méthacrylate de glycidyle ou d'aziridinyle tel que, par exemple, le méthacrylate de 2-(1-aziridinyl) éthyle.

L'obtention de télomères à partir de ces taxogènes nécessite un agent télogène dont on souhaite, notamment lors d'applications industrielles, qu'il ait un bon coefficient de transfert, c'est-à-dire qu'il réagisse le plus complètement possible.

Le choix s'est porté sur les mercaptans de formule générale $B(SH)_\beta$ dans laquelle S désigne l'atome de

soufre, β est un coefficient de valeur 1 ou 2 suivant qu'il s'agisse de dérivés mono ou di sulfurés.

Ainsi, la télomérisation par ces télogènes conduit, dans le cas d'un composé disulfuré et d'un acide comme taxogène au télomère de formule générale :

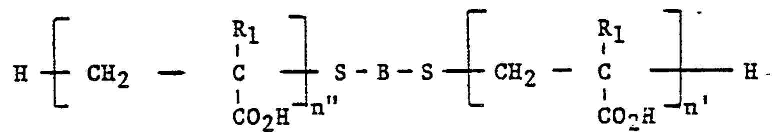

dans laquelle —B appartient au groupe constitué par les chaînes polysiloxanes, alkylènes et arylènes disubstitués. Mais on peut utiliser également des dérivés monosulfurés dans lesquels —B appartient au groupe constitué par les aryls, les aryls substitués, les alkylènes contenant 1 à 18 atomes de carbone, les alkyls fluorés du type $—CH_2—CH_2—CnF_{2n+1}$, l'acide thioglycolique ou l'acide thiomalique.

Toutefois, le dodécanethiol $C_{12}H_{25}SH$ est préféré dans de nombreuses applications.

L'invention porte sur des télomères photoréticulables, c'est-à-dire que sur les fonctions acides estérifiées ou non des télomères obtenus sont fixés des greffons possédant au moins une double liaison susceptible de s'ouvrir sous l'effet d'un rayonnement de manière à établir des « pontages » entre au moins deux greffons et assurer ainsi la réticulation souhaitée.

Ces greffons ne sont pas fixés sur toutes les molécules de taxogène mais sur une fraction d'entre elles, de façon que le télomère greffé présente des propriétés liées à la fois aux fonctions acides du taxogène et aux fonctions photoréticulables des greffons.

Plusieurs types de greffons peuvent être utilisés que l'on divise en deux catégories suivant la fonction présentée par le taxogène. En effet, si le taxogène a une fonction acide libre, le produit greffé possède un groupement glycidyle ou aziridinyle ; par contre, si le taxogène est un acrylate de glycidyle ou d'aziridinyle, le produit greffé possède alors un groupement acide.

On constate donc que, dans un cas comme dans l'autre, on a toujours présence dans la réaction de greffage soit d'un groupement glycidyle, soit d'un groupement aziridinyle, c'est-à-dire d'un groupement du type

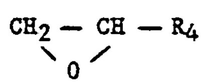 ou 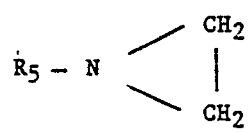

C'est en effet par l'intermédiaire de ces groupements que s'effectue, par réaction d'addition, la liaison entre taxogène et greffon. Une telle réaction a l'avantage de conduire à des vitesses de greffage relativement grandes ne nécessitant aucune activation thermique et, par suite, évitant toute réticulation précoce. On obtient ainsi des télomères greffés qui, si l'on part de taxogène à fonction acide libre, ont pour formule générale :

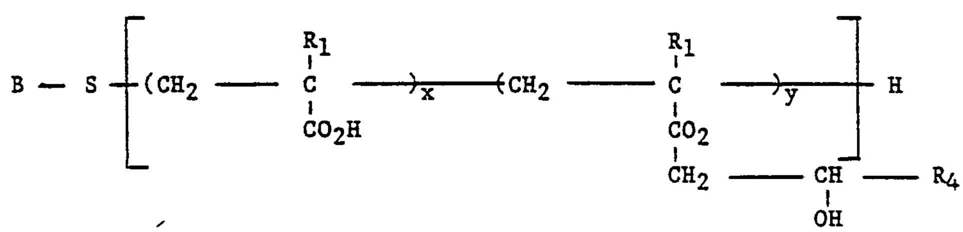

ou

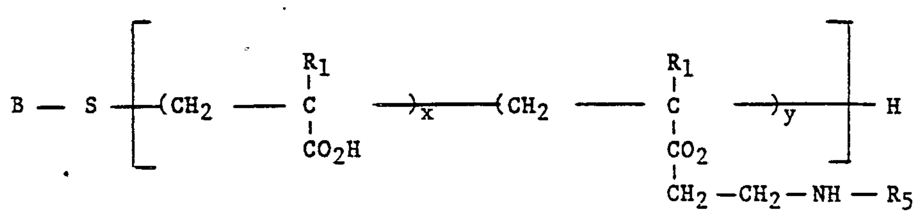

dans laquelle $R_4$ et $R_5$ possèdent au moins une liaison photoréticulable.

Il faut noter que les télomères ainsi obtenus peuvent également servir d'agents télogènes dans des réactions avec des taxogènes Yi et donner lieu à la formation de cotélomères biséquencés. Ces taxogènes Yi peuvent être des acrylates tels que, en particulier, l'acrylate de butyle, d'éthyl 2-hexyle, de vinyle.

La présente invention concerne également un procédé de synthèse de ces télomères greffés.

Ce procédé porte à la fois sur la télomérisation proprement dite et sur la façon de réaliser le greffage.

Comme tout procédé destiné à être mis en œuvre industriellement, il faut qu'il conduise de préférence à des rendements de transformation élevés, que la vitesse de réaction soit suffisamment grande, que les produits obtenus aient une composition constante afin de présenter les propriétés requises à une application donnée.

Au niveau de la télomérisation, la demanderesse peut, étant donné les télomères utilisés, recourir à un procédé dans lequel la polymérisation s'effectue par initiation radicalaire évitant ainsi les inconvénients de coloration des produits inhérents aux réactions effectuées par catalyse redox en présence de $FeCl_3$. Le choix du dodécanethiol de par son coefficient de transfert $C_T$ 10 fois supérieur à celui des composés halogénés, tels que le bromotrichlorométhane, permet d'avoir des rendements de transformation beaucoup plus élevés. Le perfectionnement le plus important consiste dans la possibilité de fabriquer des télomères de degré de polymérisation voulu avec un faible indice de polydispersité.

Comme on l'a vu plus haut dans les réactions en discontinu, telles qu'elles sont pratiquées jusqu'à présent, les composés formés en début d'opération n'ont pas le même degré de polymérisation que ceux obtenus à la fin. En effet, ces types de réaction sont régis par la relation de MAYO : $1/\overline{DPn} = (1/\overline{DPo}) + C_T R$ qui montre que $\overline{DPn}$, degré de télomérisation moyen en nombre, est fonction de $\overline{DPo}$, degré de polymérisation en l'absence de transfert, du coefficient de transfert au télogène $C_T$ et de R rapport de la concentration molaire en télogène à celle du taxogène. Ce rapport variant au fur et à mesure de l'état d'avancement de la réaction, on voit donc que le $\overline{DPn}$ n'est pas constant. D'où l'obtention d'un degré dont la moyenne statistique peut répondre au degré souhaité mais qui n'est que la résultante de degrés dont les valeurs peuvent s'écarter fortement de la moyenne.

De tels produits ayant même $\overline{DPn}$ peuvent avoir des propriétés différentes et ne pas répondre aux exigences souhaitées par l'applicateur. C'est pourquoi la demanderesse s'est efforcée de mettre au point un procédé dans lequel on obtient certes un $\overline{DPn}$ bien déterminé, mais aussi un indice de polydispersité aussi faible que possible.

Afin d'obtenir des produits les plus homogènes possible, il existe plusieurs solutions :

soit fractionner le mélange obtenu après réaction,

soit arrêter l'opération à un taux de conversion voisin de 10 % afin de ne pas s'éloigner du $\overline{DPn}$ initial.

Ces deux solutions ne donnent pas satisfaction du point de vue rentabilité.

Aussi, la demanderesse a-t-elle cherché à établir les équations cinétiques permettant de connaître l'évolution des concentrations en réactifs au cours du temps. A partir de ces données, elle a établi le processus suivant : disposant d'un mélange initial de taxogène, télogène, initiateur dissous dans un solvant dans un rapport télogène/taxogène correspondant au $\overline{DPn}$ visé, porté et maintenu à 70 °C sous courant d'azote, on introduit en continu un mélange contenant les réactifs en quantité et à une vitesse telles qu'elles permettent de maintenir le rapport R dans une fourchette de valeurs d'autant plus étroite qu'on cherche à avoir une polydispersité faible.

Il est à remarquer que, par cette méthode, la totalité des réactifs ajoutés est transformée en télomères et cela avec une vitesse pratiquement constante tout au long de la réaction, et que les quantités consommées sont directement liées aux quantités de réactifs mises en réaction à l'instant initial.

La demanderesse a choisi comme initiateur l'azobisisobutyronitrile qui, bien que moins efficace que les peroxydes, se distingue par une vitesse de décomposition pratiquement indépendante du solvant, une énergie de décomposition relativement faible qui permet d'effectuer les réactions à températures voisines de 60 °C et dont le coefficient de transfert à l'initiateur est négligeable ce qui minimise les réactions parasites.

En ce qui concerne le solvant, elle a retenu l'acétonitrile qui a un bon pouvoir de solubilisation des réactifs utilisés et une faible constante de transfert par rapport à celle du télogène. De plus, dans le cas où le taxogène est l'acide acrylique, ce solvant précipite pratiquement la totalité des télomères, ce qui facilite le traitement industriel des produits finis.

De plus, la réaction s'effectue sous azote de façon à éviter la présence d'oxygène qui inhibe les réactions de polymérisation radicalaire.

Au niveau du greffage, la demanderesse a également apporté sa contribution à l'amélioration du procédé antérieur dans lequel il était nécessaire de passer par l'intermédiaire des chlorures d'acide pour fixer des molécules photoréticulables sur l'acide acrylique constituant le taxogène. Cette phase supplémentaire a été supprimée en ayant recours à des molécules possédant des groupements glycidyle ou aziridinyle.

Les réactions qui se produisent sont les suivantes dans le cas du télomère dodécanethiol-acide méthacrylique

avec le méthacrylate de glycidyle

(Voir dessin page 6)

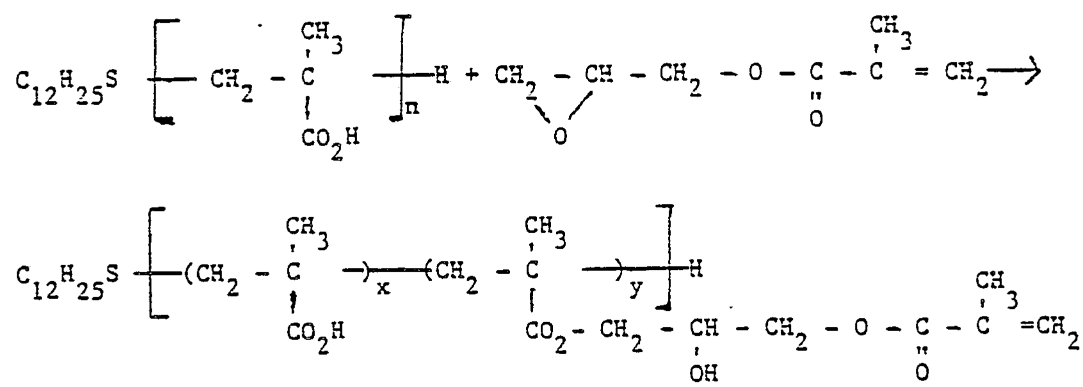

Cette réaction s'effectue en présence d'un catalyseur la N,N-diméthyl laurylamine à 60 °C, température relativement basse qui évite toute réticulation précoce entre les greffons, mais qui, néanmoins, permet d'atteindre des vitesses de greffage trois fois plus grandes que dans l'art antérieur avec le méthacrylate de 2-(1-aziridinyl)éthyle

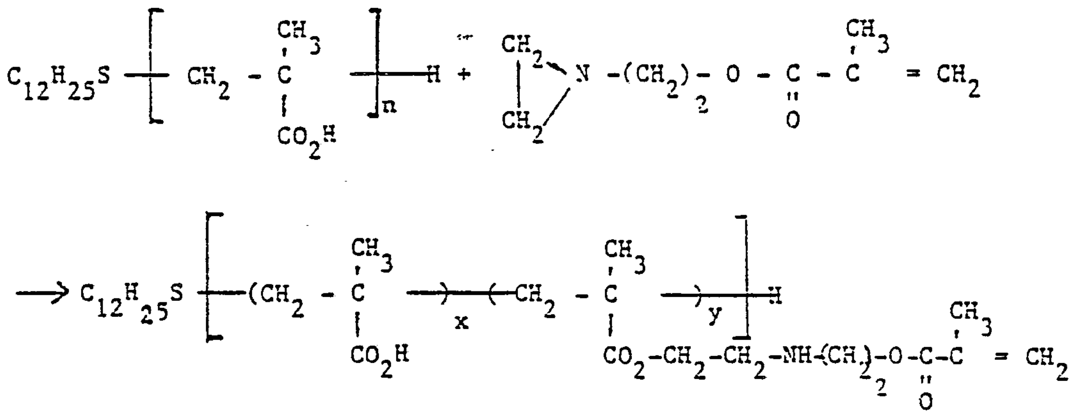

Le même catalyseur et la même gamme de température que ci-dessus peuvent être utilisés et conduisent à des vitesses également améliorées.

L'invention sera mieux comprise à l'aide des exemples de synthèse suivants qui ne peuvent en limiter la portée.

Exemple 1

Télomérisation radicalaire de l'acide méthacrylique avec le dodécanethiol

Le mélange réactionnel est préparé dans une fiole jaugée de 250 ml dans laquelle on introduit successivement 21,52 g d'acide méthacrylique soit 0,25 mole ; 10,12 g de dodécanethiol, soit 0,05 mole (ce qui donne un rapport molaire du télogène au taxogène R de 0,2) ; 8,82 g de dichloro-1,2 benzène. Le volume est ensuite ajusté exactement à 250 ml par de l'acétonitrile, puis introduit dans un ballon à trois tubulures de 500 ml équipé d'un réfrigérant, d'un thermomètre et d'un système permettant un barbotage d'azote, et porté à 70 °C tout en désoxygénant la solution. Une fois la température atteinte, on introduit dans le milieu 0,821 g d'AIBN (azobisisobutyronitrile) soit 0,005 mole et on effectue des prélèvements au cours du temps.

Les différents degrés d'avancement (α) des réactions sont mesurés par chromatographie en phase vapeur en utilisant comme étalon interne le dichloro-1,2 benzène.

Les degrés de polymérisation ($\overline{DP}_n$) sont mesurés par chromatographie par perméation de gel à partir d'une méthode mise au point sur les télomères. Dans l'exemple ci-dessus, le $\overline{DP}_n$ est égal à 8 pour un taux de conversion de 90 %.

Exemple 2

Télomérisation radicalaire en semi-continu de l'acide méthacrylique avec le dodécanethiol

Dans un ballon de 3 litres à 3 tubulures, plongé dans un bain d'huile thermostaté à 70 °C, muni d'un réfrigérateur, d'un agitateur mécanique et d'un système d'introduction en continu des réactifs sous azote,

on introduit une solution initiale composée de 172,18 g d'acide méthacrylique soit 2 moles ; 121,44 g de dodécanethiol, soit 0,6 mole ; de l'acétonitrile de manière à amener le volume à 2 litres. Le mélange réactionnel est porté à 70 °C sous un barbotage d'azote. Une fois la température atteinte, on introduit dans le milieu 9,85 g d'AIBN (azobisisobutyronitrile). A partir de cet instant, on additionne pendant 6 heures, au moyen d'une pompe péristaltique, 2,21 ml par minute d'une solution composée de 575,6 g d'acide méthacrylique, de 189,14 g de dodécanethiol et de 7,97 g d'AIBN.

Les différentes masses sont calculées de manière suivante : on fixe une variation de $\alpha$ pour laquelle la composition du télomère peut être assimilée à la composition obtenue à l'instant initial (en principe $\alpha = 0,1$). Pendant l'intervalle de temps en secondes correspondant à ce degré d'avancement, on note la consommation (pour 1 mole de monomère mise en réaction) en monomère, télogène et amorceur.

Soient $Q_1$, $Q_2$ et $Q_3$ ces consommations respectives, comme on prévoit une durée de 6 heures pour l'opération, on prépare une solution de réajustage composée de :

$Q_1 \times (6 \times 3600/t)$ monomère
$Q_2 \times (6 \times 3600/t)$ télogène
$Q_3 \times (6 \times 3600/t)$ amorceur

Exemple 3

Cotélomérisation de l'acide acrylique avec l'acrylate d'éthyl-2 hexyle avec le dodécanethiol

On met 50,4 g d'acide acrylique (0,7 mole) avec 55,3 g d'acrylate d'éthyl-2 hexyle (0,3 mole) et 5 g d'azobisisobutyronitrile (0,03 mole) dans 500 ml d'acétonitrile. On rajoute 20 g de dodécanethiol, ce qui conduit à un rapport R = (Télogène)/(monomère) de 0,1. On porte à 70 °C sous courant d'azote pendant 6 heures. Après évaporation, on obtient 125 g d'un composé de structure :

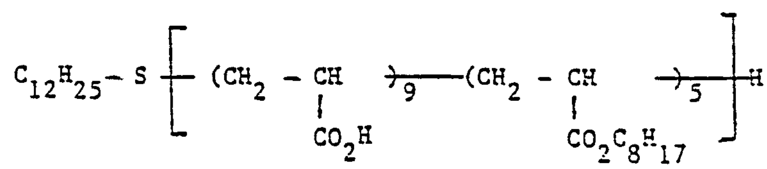

Exemple 4

Télomérisation du méthacrylate de glycidyle avec le thiophénol

Dans un tube de verre Pyrex, on introduit 0,5 mole de méthacrylate de glycidyle, 0,1 mole de $C_6H_5$—SH. Le produit est irradié sans agitation avec une lampe U.V. de 125 watts située à 10 cm et à une température de réaction de 40 °C. Après 6 heures de réaction, on recueille un composé de structure

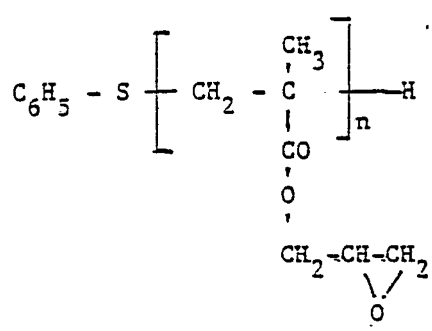

Le rendement est de 90 % et le $\overline{DP}n$ par chromatogramme GPC de 4,5, alors qu'il est de 4,3 par analyse RMN, ce qui est très concordant.

Exemple 5

Télomérisation de l'acide méthacrylique avec un dithiol

On met 86 g d'acide méthacrylique avec 48 g de 1-9 nonanedithiol avec 2 g d'azobisisobutyronitrile dans le tétrahydrofuranne (300 ml) et on porte à 70 °C le mélange réactionnel pendant 6 heures.

On obtient 120 g de télomère après évaporation et précipitation dans le pentane.

L'analyse RMN et élémentaire conduit à un composé de structure

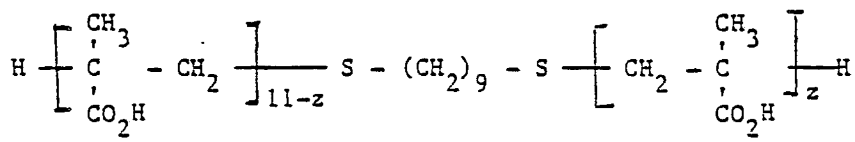

### Exemple 6

Greffage du méthacrylate de glycidyle sur les télomères de l'acide méthacrylique avec le dodécanethiol

D'une manière générale, ces réactions ont été effectuées dans un ballon inactinique de 1 litre surmonté d'un réfrigérant et plongé dans un bain d'huile régulé à 60 °C. On introduit successivement dans le ballon 150 g de télomère $\overline{DPn}$ 8, soit 0,168 mole ; 191,4 g de méthacrylate de glycidyle, soit 1,348 mole ; 23,0 g de N,N-diméthyl lauryl amine, soit 0,108 mole, puis 500 ml de tétrahydrofuranne. Après homogénéisation du mélange, on prélève pour la manipulation témoin 20 ml auxquels on ajoute 3,8 g de dichloro-1,2 benzène. On introduit ce mélange dans un ballon inactinique de 50 ml, puis l'on met en réaction les deux manipulations à 60 °C pendant 24 heures. Après avoir chassé une partie du solvant, on précipite le produit dans l'éther de pétrole. Après filtration et séchage sous vide à froid, on récupère ≃ 280 g de télomère greffé.

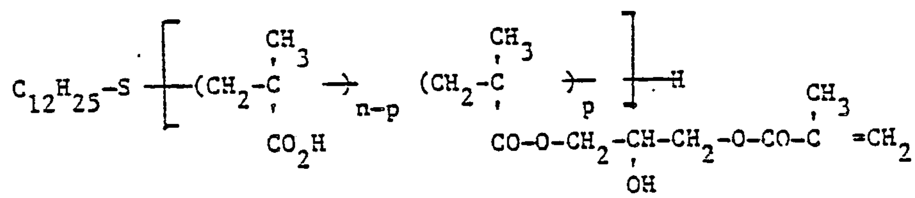

| DPn du télomère de départ (n) | Quantité de télomère (g) | Quantité de méthacrylate de glycidyle (g) | Quantité de lauryl amine (g) | Quantité de solvant (ml) | Quantité de produit contenu | $\bar{p}$ |
|---|---|---|---|---|---|---|
| 8 | 150 | 191,4 | 23 | 500 | 280 | 7 |
| 8 | 105 | 67 | 16 | 380 | 165 | 4 |
| 4 | 130 | 67,9 | 16,2 | 430 | 170 | 2 |

### Exemple 7

Greffage d'acide acrylique sur les télomères du méthacrylate de glycidyle avec $C_6H_5$—SH

Comme précédemment, dans l'exemple 6, on introduit 80 g de télomère de formule :

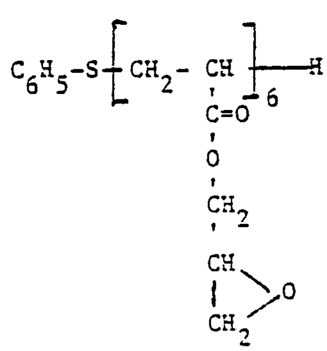

avec 18 g de N,N-diméthyl lauryl amine dont 500 ml de tétrahydrofuranne et on ajoute alors 100 g d'acide acrylique. On porte à 60 °C pendant 15 heures et on obtient après précipitation dans le pentane 120 g de cotélomère statistique de structure :

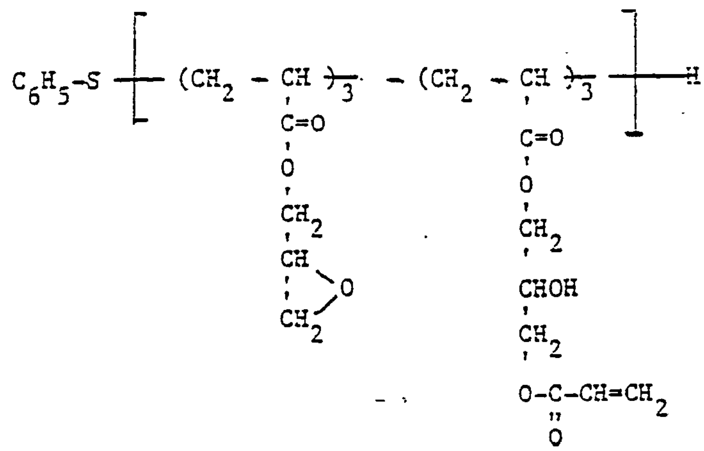

Exemple 8

Greffage du 2-(1-aziridinyl) éthyle acrylate sur les télomères du dodécanethiol avec l'acide méthacrylique

Dans un montage décrit précédemment, on introduit 100 g de télomère dans 300 ml de tétrahydrofuranne

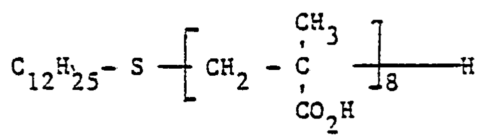

On ajoute alors 6 g de triéthyl amine et on porte à 60 °C. On ajoute en deux fois, 25 g de composé aziridinique de formule

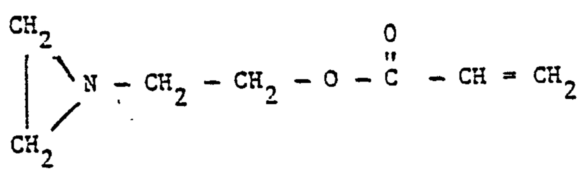

La réaction est poursuivie pendant 8 heures.

Le produit de la réaction est précipité dans l'éther de pétrole et on obtient 120 g de composé de structure

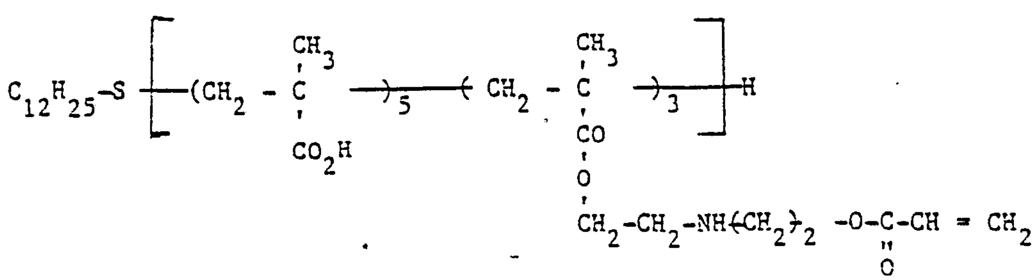

La présente invention est également relative à l'application des télomères revendiqués et plus particulièrement à leur utilisation dans le domaine de la protection des métaux tels que, notamment, l'aluminium et ses alliages.

On a vu plus haut que le greffage des télomères portait sur une fraction plus ou moins importante des molécules de taxogène, de sorte qu'il reste dans le cas des polyacides des fonctions acides libres. Ces

fonctions ont des propriétés d'adhérence sur les substrats métalliques, de sorte que les télomères destinés à des problèmes de revêtement sont le plus souvent greffés de manière à avoir un taux de greffage limité et généralement inférieur à 60 %.

Les télomères obtenus au cours des synthèses précédentes sont des solides. Leur application sur métal impose une certaine fluidité que l'on obtient par dissolution à raison de 50 % en poids au plus dans un comonomère tel que l'acrylate d'éthylène glycol (ou acrylate d'hydroxy 2-éthyle = HEA) de façon à former un vernis. On y ajoute généralement quelques % en poids d'un photosensibilisateur.

Le substrat étant ainsi verni, on procède à la réticulation et à la polymérisation qu'on appelle aussi « durcissement » au moyen d'une lampe émettant une puissance de 120 watts/cm, et dont le spectre d'émission est centré sur la bande de longueurs d'onde comprise entre 200 et 600 nm et située à environ 5 à 10 cm du substrat. Le séchage s'effectue en moins de 1 seconde pour une épaisseur finale de revêtement comprise entre 6 et 11 µm. Le revêtement présente une bonne tenue au solvant (méthyl éthyl cétone) et ses propriétés d'étalement, de brillance, d'adhérence, de dureté crayon, de tenue à la stérilisation sont convenables.

Par rapport aux télomères de l'art antérieur, les télomères de la présente invention ont en raison de leur chaîne thiol apportée par l'agent télogène des propriétés de souplesse remarquables qui se traduisent par une meilleure résistance aux contraintes mécaniques imposées au substrat.

Ces télomères peuvent être également utilisés sous forme de laques, c'est-à-dire de revêtements pigmentés ou d'adhésifs pour réaliser des complexes du type film plastique-métal. Dans ce cas, on a recours pour la récitulation non plus à une irradiation par photons, mais par électrons émis par un générateur haute tension.

Certaines applications spécifiques sont données maintenant à titre d'exemple.

Exemple 9

Vernis de coloriage

Application sur feuille d'aluminium de type 1050 ou 8011 selon les normes de l'Aluminium Association, d'épaisseur 40 µm destinée entre autres à la fabrication des capsules de bouteilles de lait.

Cette application exige du vernis une adhérence directe sur aluminium recuit, une aptitude à la déformation par emboutissage peu profond, une tenue à la stérilisation pendant 1 heure à 120 °C.

La formule qui convient le mieux est un vernis à base d'un télomère à base d'acide méthacrylique greffé par le méthacrylate de glycidyle, où le télogène est une molécule longue : le dodécanethiol. Le $\overline{DPn} = 8$ et le taux de greffage par le méthacrylate de glycidyle est de 47 %.

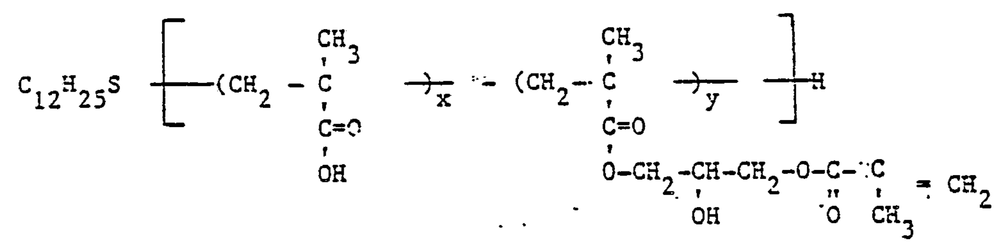

La formule utilisée comporte :

| | |
|---|---|
| Télomère | 46 parties en poids |
| Acrylate d'éthylène glycol (HEA) | 54 parties en poids |
| Photoinitiateur Darocur 1173 | 3 parties en poids |
| Bleu de phtalocyanine | 15 parties en poids |

On a ici une formule très réactive puisque le durcissement intervient avec un passage à 30 m/minute sous une lampe UV de 120 W/cm.

La tenue au frottement à la méthyléthyl cétone (MEC) est bonne (> 100 aller-retour), l'adhérence sur aluminium bonne (10/10) ainsi que la tenue à la stérilisation.

Au test d'emboutissage Erichsen (godet h/d = 0,6), seul le haut de la jupe n'est pas parfaitement adhérent. De plus, le revêtement est dur : au test du crayon, on note 2H.

Il convient de préciser que cette formule apporte une adhérence directe sur métal très supérieure à celle des formules commerciales connues.

Exemple 10

Encres offset et vernis pour aérosols et tubes

La décoration extérieure des aérosols et tubes souples s'opère en deux étapes ; on dépose en

premier lieu un couché blanc, ou une laque blanche, appliquée au rouleau sur le cylindre (aérosol ou tube) en rotation. Cette première couche est durcie dans un four. Puis, sur ce couché blanc, on dépose le motif décoratif au moyen d'encres de quatre couleurs différentes. On utilise pour cela des encres dites « offset sec » qui sont reportées sur un cliché puis sur un blanchet à partir duquel elles sont transférées sur les aérosols ou les tubes. Sur ces encres, on applique souvent un vernis de surimpression. L'ensemble est durci par cuisson au four.

Les encres offset et le vernis de surimpression peuvent être formulés avec les télomères ou cotélomères.

L'avantage de telles formules par rapport à celles nécessitant une cuisson thermique est qu'on remplace un long passage dans un four (10 à 15 minutes à 180 °C) par un durcissement extrêmement court par électrons ; dans ce dernier cas, le cylindre revêtu (aérosol ou tube) placé sur une chaîne transfert arrive devant la fenêtre d'un générateur à électrons où il est maintenu en rotation sur lui-même, pendant un temps très court.

Pour les encres offset, on a utilisé le télomère de l'acide acrylique de $\overline{DP}n = 8$, greffé par l'acrylate de glycidyle à 47 %.

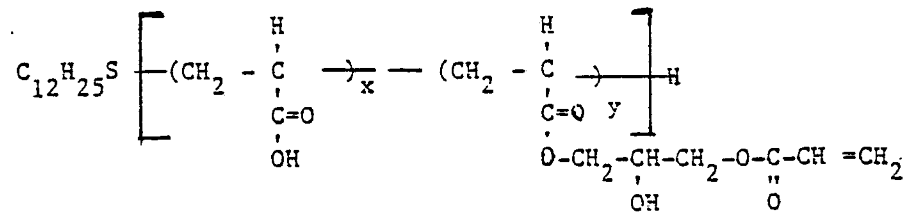

La formule utilisée est la suivante :

| | |
|---|---|
| Télomère (solide) | 60 parties en poids |
| Triacylate de triméthylol propane (TMPTA) | 10 parties en poids |
| HEA | 11 parties en poids |
| Pigment coloré | 15 parties en poids |
| Additif cire | 4 parties en poids |

Exemple 12

Peintures pour prélaquage (coil coating)

Le prélaquage sur acier ou aluminium est une technique largement répandue, employée pour réaliser par exemple des tôles pour caravanes, des bardages pour le bâtiment, des tôles pour appareils électroménagers.

On utilise de la bande d'épaisseur et de largeur variables qui passe en continu et à des vitesses de 40 à 100 m/minute dans une ligne de traitement. La bande est d'abord dégraissée, subit ensuite un traitement de conversion chimique (phosphatation, chromatation), puis reçoit une ou plusieurs couches de peinture appliquées au moyen d'une laqueuse à rouleaux, enfin passe dans un four où la peinture est durcie.

Dans la pratique, on applique soit une seule couche de peinture de finition, ou dans les lignes dites bi-couches, un primaire plus une finition.

Les fours de cuisson, généralement à convection d'air, sont très longs et encombrants. L'emploi d'un générateur d'électrons pour durcir les laques, qui peut être très facilement implanté sur la ligne, permet de réduire considérablement la longueur de la zone de durcissement des laques.

Il faut rappeler que le durcissement par rayonnement des peintures de prélaquage, qui contiennent toutes des pigments opaques, ne peut se faire qu'au moyen des générateurs à électrons.

Il est très difficile d'avoir une bonne adhérence directe sur aluminium traité par conversion chimique au moyen de formules de laques durcies par électrons. De plus, la souplesse des laques ainsi obtenues est généralement insuffisante pour accepter les mises en forme qu'on fait subir ultérieurement aux tôles.

L'avantage des formules à base de télomères photoréticulables est précisément qu'on peut atteindre l'adhérence et la souplesse nécessaires, contrairement aux autres laques à durcissement par rayonnement actuellement disponibles sur le marché. Toutefois, étant donné que la couche de conversion à base de chromates ou de phosphates entraîne parfois des incompatibilités avec certains télomères, il est préférable d'appliquer sur cette couche de conversion un primaire du type époxy ou acrylique à l'eau, à cuisson conventionnelle en couche très mince, d'environ trois microns, avant de déposer la couche à durcissement par rayonnement.

Les télomères utilisés pour cette application sont à base d'acide méthacrylique greffé par le méthacrylate de glycidyle. On a vu que du point de vue des propriétés finales du revêtement, il était important de pouvoir juxtaposer dans la constitution du polymère un chaînon réactif c'est-à-dire

contenant des doubles liaisons et un chaînon inactif suffisamment long pour donner une bonne souplesse à la peinture.

Dans ce cas, le télogène est effectivement une chaîne linéaire longue, le dodécanethiol.

Le degré de polymérisation d'une telle molécule peut être variable, de préférence de 4-6 ou 8 et le taux de greffage par le méthacrylate de glycidyle ne doit pas être trop élevé ; on l'a choisi autour de 50 % ce qui autorise à la fois une vitesse élevée de durcissement et une bonne souplesse du revêtement.

Le télomère a donc la formule suivante :

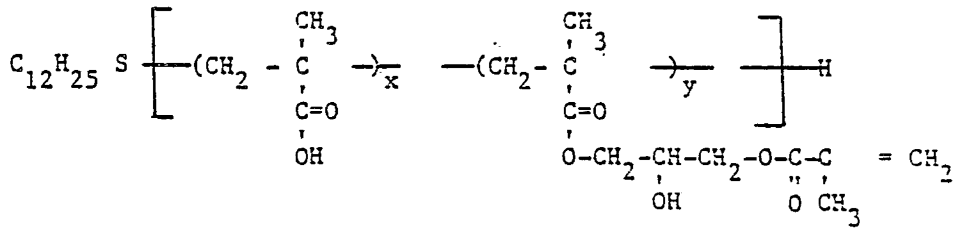

Le degré de polymérisation est ici = 4 avec sensiblement x = y = 2.

Un exemple de formule de peinture est donné ci-après :

| | |
|---|---|
| Télomère | 46 parties en poids |
| HEA | 48 parties en poids |
| Diacrylate de tétraéthylène glycol | 6 parties en poids |
| Pigment oxyde de titane | 70 parties en poids |
| Agent d'étalement | 1,5 partie en poids |
| Tensio actif | 0,02 partie en poids |

Le film de peinture, d'épaisseur ~ 20 microns, est bien durci sous électrons, avec une dose de 3 Mrads, la tension d'accélération étant de 160 kV, puisqu'on obtient une résistance au frottement MEC > 100 aller-retour. L'adhérence est très bonne : 10/10 au test du quadrillage + choc + scotch, la dureté crayon est H—2H, la souplesse est bonne si l'on en juge selon le test d'emboutissage Erichsen et selon le test de pliage au mandrin conique (Norme ASTM D 522) où l'on trouve la valeur de 1 e.

Enfin, au test du brouillard salin, on n'observe pas de piqûres ni de décollement sur la croix après 1 000 heures d'exposition.

**Revendications**

1. Télomères de formule générale

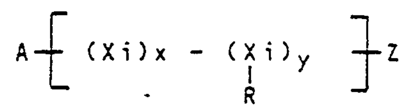

dans laquelle Xi le taxogène est un dérivé de la famille des acryliques, AZ le télogène, x + y ≤ 100, R est un greffon présentant au moins une double liaison photoréticulable, caractérisés en ce que le taxogène appartient au groupe formé par les acides acrylique, méthacrylique, chloroacrylique, cyanoacrylique, itaconique, le télogène est un mercaptan où —A = —BSβ, —B étant un radical organique et —Z = Hβ avec β ≤ 2, le greffon appartient au groupe formé par l'acrylate de glycidyle, le méthacrylate de glycidyle, le cinnamate de glycidyle, le cinnamylidène de glycidyle, le furylacrylate de glycidyle, l'allylate de glycidyle, l'éther allylique et glycidique, l'acrylate et le méthacrylate 2-(1-aziridinyl)éthyle, l'acrylate et le méthacrylate 3-(1-aziridinyl)propyle, l'acrylate et le méthacrylate 4-(1-aziridinyl)butyle, l'acrylate et le méthacrylate 6-(1-aziridinyl)hexyle, l'acrylate et le méthacrylate 8-(1-aziridinyl)octyle.

2. Télomères de formule générale

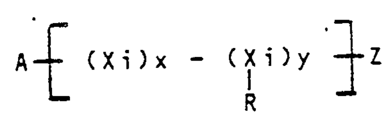

dans laquelle Xi le taxogène est un dérivé de la famille des acryliques, AZ le télogène, x + y ≤ 100, R est un greffon présentant au moins une double liaison photoréticulable, caractérisés en ce que le taxogène appartient au groupe formé par l'acrylate de glycidyle, le méthacrylate de glycidyle, le méthacrylate de 2-(1-aziridinyl)éthyle, le télogène est un mercaptan où —A = BSβ, —B étant un radical organique et —Z = Hβ avec β ≤ 2, le greffon appartient au groupe formé par les acides acrylique, méthacrylique, cinnamique, cinnamylidique, furylacrylique.

3. Télomères selon les revendications 1 ou 2, caractérisés en ce que le télogène appartient au groupe constitué par l'acide thioglycolique et l'acide thiomalique.

4. Télomères selon les revendications 1 ou 2, caractérisés en ce que β étant égal à 1, —B appartient au groupe constitué par les aryls, les aryls substitués, les alkylènes contenant 1 à 18 atomes de carbone, les alkyls fluorés du type $—CH_2—CH_2—CnF_{2n+1}$.

5. Télomères selon les revendications 1 ou 2, caractérisés en ce que le télogène est le dodécanethiol.

6. Télomères selon la revendication 1, caractérisés en ce que β étant égal à 2, —B appartient au groupe constitué par les chaînes polysiloxane, alkylènes et arylènes disubstitués.

7. Télomères selon les revendications 1 ou 2, caractérisés en ce que le degré de télomérisation est compris entre 4 et 10.

8. Télomères selon les revendications 1 ou 2, caractérisés en ce que le taux de greffage est compris entre 40 et 60 %.

9. Procédé de fabrication de télomères selon les revendications 1 ou 2, dans lequel on télomérise par amorçage radicalaire puis greffe un greffon présentant au moins une double liaison photoréticulable, caractérisé en ce que :

a) dans le but d'obtenir directement des télomères ayant un indice de polydispersité faible, on part d'un mélange initial contenant les réactifs : le télogène et le taxogène, dans un rapport molaire correspondant au DPn visé et de l'azobisisobutyronitrile comme agent d'amorçage, on dissout ce mélange dans l'acétonitrile et porte l'ensemble à 70 °C sous courant d'azote puis on introduit en continu dans le mélange les réactifs en quantité et à vitesse telle qu'elles permettent de maintenir la valeur du rapport ;

b) on greffe directement sur le télomère obtenu un greffon présentant une liaison photoréticulable par chauffage à 60 °C en présence de N,N-diméthyllaurylamine.

10. Application d'un télomère des revendications 1 ou 2 pour la formation d'un vernis, caractérisée en ce que le télomère est dissous à raison de 30 à 50 % en poids dans un comonomère et réticulé par rayonnement photonique.

11. Application selon la revendication 10, caractérisée en ce que le comonomère appartient au groupe constitué par l'acrylate d'éthylène glycol, le triacylate de triméthylpropane.

12. Application d'un télomère selon les revendications 1 ou 2, pour la formation de peintures et de laques caractérisée en ce que le télomère est réticulé par bombardement d'électrons.

## Claims

1. Telomers of general formula

$$A-\left[(Xi)_x - (\underset{R}{\underset{|}{Xi}})_y\right]-Z$$

in which Xi the taxogen is a derivative of the acrylics group, AZ the telogen, x + y ≤ 100, R is a graft link containing at least one photocrosslinkable double bond, which are characterized in that the taxogen belongs to the group consisting of acrylic, methacrylic, chloroacrylic, cyanoacrylic and itaconic acids, the telogen is a mercaptan where —A = —BSβ, —B being an organic radical and —Z = Hβ with β ≤ 2, the graft link belongs to the group consisting of glycidyl acrylate, glycidyl methacrylate, glycidyl cinnamate, glycidyl cinnamylidene, glycidyl furylacrylate, glycidyl allylate, allyl glycidyl ether, 2-(1-aziridinyl)ethyl acrylate and methacrylate, 3-(1-aziridinyl)propyl acrylate and methacrylate, 4-(1-aziridinyl)butyl acrylate and methacrylate, 6-(1-aziridinyl)hexyl acrylate and methacrylate and 8-(1-aziridinyl)octyl acrylate and methacrylate.

2. Telomers of general formula

$$A-\left[(Xi)_x - (\underset{R}{\underset{|}{Xi}})_y\right]-Z$$

in which Xi the taxogen is a derivative of the acrylics group, AZ the telogen, x + y ≤ 100, R is a graft link containing at least one photocrosslinkable double bond, which are characterized in that the taxogen belongs to the group consisting of glycidyl acrylate, glycidyl methacrylate and 2-(1-aziridinyl)ethyl methacrylate, the telogen is a mercaptan where —A = BSβ, —B being an organic radical and —Z = Hβ with β ≤ 2, and the graft link belongs to the group consisting of acrylic, methacrylic, cinnamic, cinnamylidic and furylacrylic acids.

3. Telomers according to Claims 1 or 2, characterized in that the telogen belongs to the group consisting of thioglycolic acid and thiomalic acid.

4. Telomers according to Claims 1 or 2, characterized in that, when β is equal to 1, —B belongs to the group consisting of aryls, substituted aryls, alkylenes containing 1 to 18 carbon atoms, and fluorinated alkyls of the type $—CH_2—CH_2—CnF_{2n+1}$.

5. Telomers according to Claims 1 or 2, characterized in that the telogen is dodecanethiol.

6. Telomers according to Claim 1, characterized in that when β is equal to 2, —B belongs to the group consisting of disubstituted polysiloxane, alkylene and arylene chains.

7. Telomers according to Claims 1 or 2, characterized in that the degree of telomerization is between 4 and 10.

8. Telomers according to Claims 1 or 2, characterized in that the degree of grafting is between 40 and 60 %.

9. Process for the manufacture of telomers according to Claims 1 or 2, in which telomerization is carried out using radical initiation and then a graft link containing at least one photocrosslinkable double bond is grafted on, characterized in that:

a) in order to obtain directly telomers which have a low polydispersity index, the starting point is an initial mixture containing the reactants: the telogen and the taxogen, in a molar ratio corresponding to the DPn aimed at an azobisisobutyronitrile as initiating agent, this mixture is dissolved in acetonitrile and the whole is heated to 70 °C under a stream of nitrogen and the reactants are then introduced continuously into the mixture, in such quantity and at such rate that they allow the value of the ratio to be maintained;

b) a graft link containing a photocrosslinkable bond is grafted directly onto the telomer by heating to 60 °C in the presence of N,N-dimethyllaurylamine.

10. Application of a telomer of Claims 1 or 2 for the formation of a varnish, characterized in that the telomer is dissolved in a proportion of 30 to 50 % by weight in a comonomer and is crosslinked by photon radiation.

11. Application according to Claim 10, characterized in that the comonomer belongs to the group consisting of ethylene glycol acrylate and trimethylpropane triacylate.

12. Application of a telomer according to Claims 1 or 2, for the formation of paints and of lacquers, characterized in that the telomer is crosslinked by electron bombardment.

**Patentansprüche**

1. Telomere der allgemeinen Formel

$$A \left[ (Xi)x - \underset{\displaystyle R}{\underset{|}{(Xi)}}{}_y \right] Z$$

in der Xi das Taxogen ist und eine Verbindung aus der Familie der acrylischen Verbindungen ist, in der AZ das Telogen ist, x + y ≤ 100 ist, R eine aufgepfropfte Seitenkette ist, die wenigstens eine fotovernetzbare Doppelbindung aufweist, dadurch gekennzeichnet, daß das Taxogen zur Gruppe gehört bestehend aus den Acrylsäuren, Methacrylsäuren, Chloracrylsäuren, Cyanoacrylsäuren, Itaconsäuren ist, daß das Telogen ein Mercaptan ist, wobei —A = —BSβ, wobei —B ein organischer Rest ist und —Z = Hβ mit β ≤ 2, wobei die aufgepfropfte Seitengruppe ausgewählt ist aus der Gruppe bestehend aus Glycidylacrylat, Glycidylmethacrylat, Glycidylcinnamat, Glycidylcinnamyliden, Glycidylfurylacrylat, Glycidylallylat, Allylglycidylether, 2-(1-Aziridinyl)ethylacrylat oder -methacrylat, 3-(1-Aziridinyl)propylacrylat oder -methacrylat, 4-(1-Aziridinyl)butylacrylat oder -methacrylat, 6-(1-Aziridinyl)hexylacrylat oder -methacrylat und 8-(1-Aziridinyl)octylacrylat oder -methacrylat.

2. Telomere der allgemeinen Formel

$$A \left[ (Xi)x - \underset{\displaystyle R}{\underset{|}{(Xi)}}{}_y \right] Z$$

in der Xi das Taxogen ist und eine Verbindung aus der Familie der Acrylverbindungen ist, AZ das Telogen ist, x + y ≤ 100, R eine aufgepfropfte Seitenkette ist mit wenigstens einer fotovernetzbaren Doppelbindung, dadurch gekennzeichnet, daß das Taxogen ausgewählt wird aus der Gruppe bestehend aus Glycidylacrylat, Glycidylmethacrylat, 2-(1-Aziridinyl)ethylmethacrylat, daß das Telogen ein Mercaptan ist, wobei —A = BSβ, worin —B ein organischer Rest ist und —Z = Hβ mit β ≤ 2, und daß die aufgepfropfte Seitenkette ausgewählt ist aus der Gruppe bestehend aus den Acrylsäuren, Methacrylsäuren, Zimtsäuren, Cinnamylidensäuren und Furylacrylsäuren.

3. Telomere gemäß Anspruch 1 oder 2, dadurch gekennzeichnet, daß das Telogen zur Gruppe bestehend aus Thioglykolsäure und Thioapfelsäure gehört.

4. Telomere nach Anspruch 1 oder 2, dadurch gekennzeichnet, daß β gleich 1 ist, und —B zu der Gruppe bestehend aus den Arylresten, substituierten Arylresten, den Alkylenen mit 1 bis 18 Kohlenstoffatomen und den fluorierten Alkylresten vom Typ $—CH_2—CH_2CnF_{2n+1}$ gehört.

5. Telomere nach Anspruch 1 oder 2, dadurch gekennzeichnet, daß das Telogen Dodecanthiol ist.

6. Telomere nach Anspruch 1, dadurch gekennzeichnet, daß wenn β gleich 2 ist, —B zur Gruppe bestehend aus den Polysiloxanketten, Alkylenketten und disubstituierten Arylenketten gehört.

7. Telomere nach Anspruch 1 oder 2, dadurch gekennzeichnet, daß der Grad der Telomerisation zwischen 4 und 10 beträgt.

8. Telomere nach Anspruch 1 oder 2, dadurch gekennzeichnet, daß der Pfropfungsgrad zwischen 40 und 60 % beträgt.

9. Verfahren zur Herstellung von Telomeren gemäß Anspruch 1 oder 2, bei dem man durch radikalischen Kettenstart telomerisiert und dann einen Pfropf aufpfropft, der wenigstens eine fotovernetzbare Doppelbindung aufweist, dadurch gekennzeichnet, daß :

a) man um direkt Telomere zu erhalten, die einen geringen Polydispersitätsindex aufweisen, ausgeht von einer Anfangsmischung enthaltend die Reaktanden : das Telogen und das Taxogen in einem molaren Verhältnis entsprechend dem angestrebten Telomerisationsgrad, wobei man Azobisisobutyronitril als Starter verwendet, man das Gemisch in Acetonitril löst und das Ganze unter einem Stickstoffstrom auf 70 °C bringt, und dann kontinuierlich die Reaktanden in das Gemisch einbringt, in einer solchen Menge und mit einer solchen Geschwindigkeit, daß es möglich ist, den Wert des Verhältnisses aufrecht zu erhalten ;

b) man direkt auf das erhaltene Telomer einen Pfropf aufpfropft, der eine fotovernetzbare Bindung aufweist, indem man auf 60 °C in Gegenwart von N,N-Dimethyllaurylamin erwärmt.

10. Verwendung eines Telomers gemäß den Ansprüchen 1 oder 2 zur Herstellung eines Lacks, dadurch gekennzeichnet, daß das Telomer in einem Verhältnis von 30 bis 50 Gew.% in einem Comonomer gelöst ist und durch Photonenbestrahlung vernetzt ist.

11. Verwendung nach Anspruch 10, dadurch gekennzeichnet, daß das Comonomer zur Gruppe bestehend aus Ethylenglycolacrylat und Trimethylpropantriacylat gehört.

12. Verwendung eines Telomeren gemäß einem der Ansprüche 1 oder 2, für die Herstellung von Farben oder Lacken, dadurch gekennzeichnet, daß das Telomer durch Elektronenbeschuß vernetzt ist.